Europäisches Patentamt

European Patent Office

Office européen des brevets

(11) Veröffentlichungsnummer: **0 410 227 A1**

## (12) EUROPÄISCHE PATENTANMELDUNG

(21) Anmeldenummer: 90113398.3

(22) Anmeldetag: **13.07.90**

(51) Int. Cl.⁵: **B23D 49/16**

(30) Priorität: **28.07.89 DE 3925008**

(43) Veröffentlichungstag der Anmeldung:
**30.01.91 Patentblatt 91/05**

(84) Benannte Vertragsstaaten:
**CH DE ES FR GB IT LI NL**

(71) Anmelder: **Abel, Helmut**
**74, Bd. d'Italie**
**Monte Carlo(MC)**

(72) Erfinder: **Abel, Helmut**
**74, Bd. d'Italie**
**Monte Carlo(MC)**

(74) Vertreter: **Patentanwälte Dipl.-Ing. Klaus**
**Westphal Dr. rer. nat. Bernd Mussgnug Dr.**
**rer.nat. Otto Buchner**
**Waldstrasse 33**
**D-7730 VS-Villingen-Schwenningen(DE)**

### (54) Säge, insbesondere Stichsäge oder Dekupiersäge.

(57) Die Erfindung betrifft eine Säge, insbesondere eine Stichsäge oder Dekupiersäge, mit einem Sägeblatt, das von einem Motor über ein Parallelogrammgestänge angetrieben ist. Das Sägeblatt (9) ist an einem die beiden Längsarme (1, 2) verbindenden Verbindungsschenkel (6) befestigt, wobei die beiden Längsarme (1, 2) in ihrer Längsrichtung verschieblich angeordnet sind. An mindestens einem der beiden Längsarme (2) ist ein Führungselement (12), beispielsweise in Form einer beweglichen Rolle, an einer vorzugsweise im spitzen Winkel zum Verbindungsschenkel (6) geneigten, feststehenden Führungsfläche (14) zwangsgeführt. Durch diese Zwangsführung wird die Rückwärtsbewegung des Sägeblattes von der Schnittkante während des Leerhubes auf ein gewünschtes Maß reduziert. Damit ist bei kleiner Baugröße und gleichzeitig großem Hub eine Stichsäge realisierbar, bei der einerseits das Sägeblatt ständig parallel zur Schnittkante geführt ist und andererseits während des Leerhubes um ein geringes Maß von der Schnittkante zurückbewegt wird.

Fig.1

EP 0 410 227 A1

## SÄGE, INSBESONDERE STICHSÄGE ODER DEKUPIERSÄGE

Bei herkömmlichen Stichsägen wird das Sägeblatt meist mittels einer Antriebsstange in seiner Lächsachse hin- und herbewegt. Daneben sind auch sogenannte Pendelhub-Sägen bekannt, bei denen dem Sägeblatt zur Steigerung der Schnittleistung zusätzlich während des Arbeitshubes noch eine Kippbewegung aufgezwungen wird, durch die vor allem die Sägezähne im Bereich der Sägeblattspitze durch ihre Schräglage tiefer in den zu sägenden Werkstoff eindringen.

Die Stichsägen mit linear bewegtem Sägeblatt haben den Nachteil, daß bei jedem Leerhub die Schneidezähne mit ihrem Rücken in den zu sägenden Werkstoff gedrückt werden. Dadurch kann das Sägeblatt schnell stumpf werden, insbesondere wenn der Rücken der empfindlichen Schneidezähne beim Sägen von harten Werkstoffen wie Metallen beim Leerhub gegen die Schnittkante hämmert. Zudem ist ein recht hoher Kraftaufwand erforderlich, und der Lauf der Säge ist sehr unruhig.

Bei den Pendelhub-Sägen besteht ein zusätzlicher Nachteil darin, daß das Sägeblatt nicht ständig senkrecht zur Schnittkante geführt ist, sondern vor jedem Arbeitshub in eine Schräglage gezwungen wird, wodurch die Schnittgenauigkeit beeinträchtigt wird.

Es ist weiterhin bekannt, Stichsägen über ein Parallelogrammgestänge mittels eines Exzenters anzutreiben (z.B. DE-PS 23 34 911, Fig. 5 - 7; DE_OS 37 22 542). Bei dieser Ausführung hebt zwar das Sägeblatt während des Leerhubes von der Schnittkante ab, jedoch ist die dadurch bedingte Rückwärtsbewegung, der Rücksprung, während des Leerhubes groß, insbesondere bei einer kurzen Baugröße des Parallelgestänges. Umgekehrt ergibt sich während des Arbeitshubes eine große Vorwärtsbewegung (Vorsprung), was zu starkem Verschleiß des Sägeblattes führt und sogar eine Überlastung des Antriebes zur Folge haben kann. Ein großer Vor- und Rücksprung beeinträchtigt auch die Schnittgeschwindigkeit und insbesondere die Kurvengängigkeit, so daß kleinere Radien nicht geschnitten werden können. Werden die beiden parallelen Längsarme des Parallelgestänges besonders lang ausgeführt, so kann zwar dieses Problem umgangen werden, jedoch führt dies zu einer unerwünschten Vergrößerung der Abmessungen.

Die Aufgabe der Erfindung besteht darin, zur Vermeidung dieser Nachteile eine über ein Parallelogrammgestänge angetriebene Säge so zu verbessern, daß der Rücksprung bzw. der Vorsprung vermindert werden und gleichzeitig die Erzielung einer hohen Schnittleistung bei kleiner Baugröße möglich ist.

Diese Aufgabe wird bei einer Säge der eingangs genannten Gattung erfindungsgemäß durch das Kennzeichen des Anspruches 1 gelöst. Vorteilhafte Weiterbildungen der Erfindung sind in den Unteransprüchen gekennzeichnet.

Der Vorsprung des Sägeblattes während des Arbeitshubes bzw. der Rücksprung des Sägeblattes während des Leerhubes werden nicht durch die Geometrie des Parallelogrammgestänges bestimmt, sondern durch die Bewegung mindestens eines vorzugsweise kreisförmigen Führungselementes entlang einer feststehenden Führungsfläche, die gegenüber dem die beiden Längsarme des Parallelogrammgestänges verbindenden Verbindungsschenkel winklig, vorzugsweise im spitzen Winkel, geneigt ist. Um den nötigen Ausgleich des Parallelogrammgestänges während des Arbeitshubes und des Leerhubes zu ermöglichen, sind die beiden Längsarme in ihrer Längsrichtung verschieblich angeordnet.

Durch die Zwangsführung des Parallelogrammgestänges läßt sich der Vorsprung des Sägeblattes während des Arbeitshubes bzw. der Rücksprung des Sägeblattes während des Leerhubes auf ein gewünschtes Maß begrenzen. Auf diese Weise kann auch bei einer relativ kleinen Baugröße der Säge zur Erzielung einer hohen Schnittleistung ein großer Hub verwendet werden.

Die Neigung der Führungsfläche wird vorzugsweise so ge wählt, daß sich ein Vor- bzw. Rücksprung zwischen 0.5 und 2 mm, vorzugsweise von etwa 1 mm, ergibt.

Die beiden Längsarme können an einem gemeinsamen Lagerbock drehbeweglich gelagert sein, der seinerseits in Richtung zur Schnittkante hin verschieblich angeordnet ist. Bei dieser Ausführung erfolgt der Andruck des Führungselementes an die Führungsfläche über eine Feder, beispielsweise über eine Schraubendruckfeder, die auf den Lagerbock wirkt.

In alternativer Ausführung kann das Element innerhalb einer Ausnehmung eines feststehenden Führungsbügels zwischen parallelen Führungsflächen beidseitig geführt sein. Wird die Neigung des Führungsbügels und damit der beiden Führungsflächen verstellbar ausgebildet, so ist dadurch eine einfache Einstellmöglichkeit für den Vor- bzw. Rücksprung des Sägeblattes gegeben.

Falls gewünscht, können auch beide Längsarme über ein eigenes Führungselement in Verbindung mit der zugehörigen Führungsfläche geführt werden, so daß eine Aufhängung an getrennten feststehenden Drehlagern möglich ist und auf einen gemeinsamen verschieblichen Lagerbock verzichtet werden kann. Bei dieser Ausführung sind die beiden Längsarme teleskopartig verlängerbar ausgebildet.

Die Säge kann je nach gewünschter Anwendung entweder als feststehendes Gerät, etwa mit nach oben weisendem Auflagetisch, oder als tragbares handgeführtes Gerät mit nach unten weisendem Sägeblatt (Handstichsäge) ausgeführt sein.

Zur Anwendung als Stichsäge kann das Sägeblatt vorzugsweise über eine Schnellspanneinrichtung an dem Verbindungsschenkel befestigt sein und aus dem Gehäuse der Säge einseitig hervorstehen. Es kann jedoch auch eine beidseitige Einspannmöglichkeit für Industrie-Laubsägeblätter vorgesehen sein, so daß die Säge als Feinschnitt-Dekupiersäge verwendbar ist. Hierzu kann beispielsweise der Verbindungsschenkel als U-förmiger Bügel ausgebildet sein, zwischen dessen beiden Schenkeln das Sägeblatt eingespannt werden kann, oder das Sägeblatt kann unmittelbar zwischen den auseinanderspreizbaren Längsarmen eingespannt werden, so daß der Verbindungsschenkel entfallen kann.

Die Säge ist nachstehend anhand von Ausführungsbeispielen, die in den Zeichnungen dargestellt sind, näher beschrieben. Es zeigen :

Figur 1 eine schematische Ansicht einer erfindungsgemäßen Stichsäge in einer ersten Ausführungsform,

Figur 2 einen Abschnitt eines Längsarmes der Stichsäge in einer zweiten Ausführungsform und

Figur 3 einen Abschnitt eines Längsarmes der Stichsäge in einer dritten Ausführungsform.

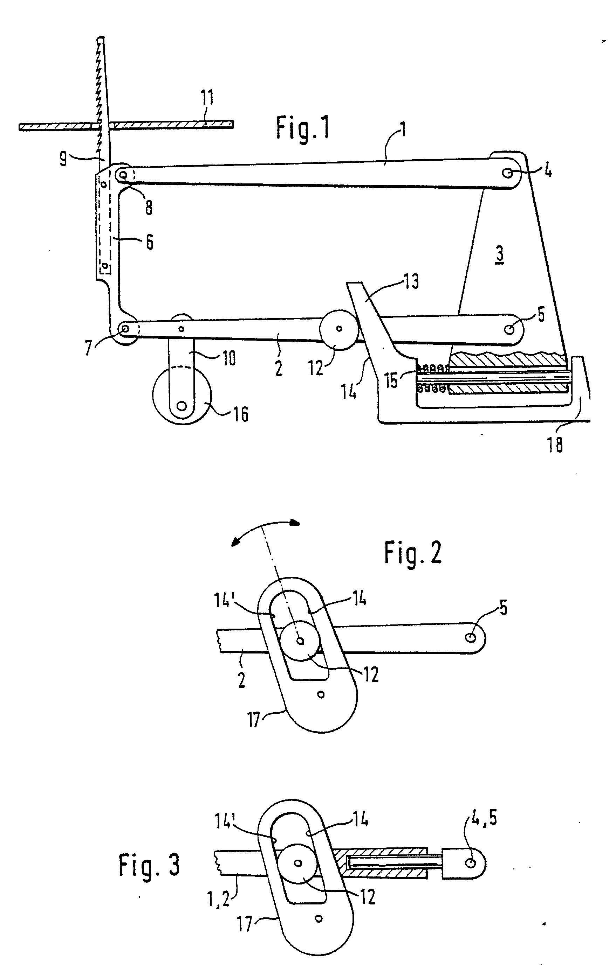

Bei der Stichsäge gemäß Figur 1 wird das Sägeblatt 9 über ein Parallelogrammgestänge 1, 2, 6 mittels eines Exzenters 16 angetrieben. Die beiden parallelen Längsarme 1, 2 sind mit einem Ende in je einem Drehlager 4, 5 an einem gemeinsamen Lagerbock 3 gelagert und an ihrem anderen Ende über je ein Gelenk 8, 7 mit einem gemeinsamen Verbindungsschen kel 6 verbunden. Am Verbindungsschenkel 6 ist eine im Detail nicht dargestellte Schnellspann-Halterung für das Sägeblatt 9 vorgesehen. Die Stichsäge ist als stationäres Gerät ausgebildet, so daß das Sägeblatt 9 von unten durch eine Öffnung des Werkstückauflagetisches 11 hervorsteht. Zum Antrieb der Stichsäge ist ein motorgetriebener Exzenter 16 vorgesehen, der mit dem unteren Längsarm 2 über eine Exzenterstange 10 verbunden ist.

Alternativ kann das Sägeblatt, z.B. bei Industrie-Laubsägeblättern für Feinschnitt-Dekupiersägen, auch beidseitig eingespannt werden. Hierzu wird entweder der Verbindungsschenkel 6 als U-förmiger Bügel ausgebildet, zwischen dessen Schenkel das Sägeblatt 9 eingespannt wird. Oder der Verbindungsschenkel 6 entfällt ganz und das Sägeblatt 9 wird unmittelbar an den Enden der Längsarme 1, 2 eingespannt. Die Längsarme 1, 2 werden hierzu auseinandergespreizt, wozu beispielsweise ein Spindelspanner verwendet werden kann, der an über die Drehlager 4, 5 hinaus verlängerten Enden der Längsarme 1, 2 angreift und diese verbindet. In diesem Fall bildet das Sägeblatt 9 selbst den Verbindungsschenkel des Parallelogrammgestänges.

Etwa im mittleren Bereich zwischen dem Drehlager 5 und dem Gelenk 7 ist am unteren Längsarm 2 ein Führungselement 12 vorgesehen, das als drehbewegliche Rolle ausgebildet ist. Es kann alternativ auch als fester oder drehbeweglicher Zapfen ausgeführt sein. Das Führungselement 12 liegt mit seinem Umfang an einer planen Führungsfläche 14 eines feststehenden Führungskörpers 13 an. Die Führungsfläche 14 ist gegen den Verbindungsschenkel 6 im spitzen Winkel geneigt. Der gemeinsame Lagerbock 3, an dem das Parallelogrammgestänge gelagert ist, ist in Horizontalrichtung verschiebbar geführt. Er ist dazu an seinem unteren Ende von mindestens einer Führungsstange durchsetzt, die innerhalb eines feststehenden U-förmigen Bügels 18 angeordnet ist, dessen einer Schenkel in den Führungskörper 13 übergeht. Zwischen dem Lagerbock 3 und dem Bügel 18 ist eine Feder 15 in Form einer vorkomprimierten Schraubendruckfeder angeordnet, durch die das Parallelogrammgestänge mit dem Führungselement 12 gegen die Führungsfläche 14 gedrückt wird.

Bewegt man durch Drehung des Exzenters 16 das Parallelogrammgestänge von seinem unteren Totpunkt bis zum oberen Totpunkt (Leerhub), so wird das Sägeblatt 9 um ein bestimmtes Maß, den Rücksprung, von der Schnittkante zurückbewegt. Im Arbeitshub wird das Sägeblatt 9 wieder um das gleiche Maß, den Vorsprung, parallel in Richtung auf die Schnittkante verschoben. Die Größe dieses Vor- bzw. Rücksprunges ist durch die Zwangsführung des Führungselementes 12 an der geneigten Führungsfläche 14 vorgegeben. Die Neigung der Führungsfläche 14 ist so gewählt, daß der bei einem feststehenden, relativ kurzen Parallelogrammgestänge zu große Rücksprung auf ein technisch ideales Maß von etwa 1 mm reduziert ist. Während des Leerhubes verschiebt sich das gesamte Parallelogramm mit seinem Lagerbock in Richtung auf die Schnittkante, wobei die Druckkraft der Feder überwunden wird. Während des Arbeitshubes entfernt sich das Parallelogramm unter der Wirkung der Feder wieder von der Schnittkante. Im Ergebnis wird die starke Verkürzung des Parallelogrammes während der Aufwärtsbewegung durch die gleichzeitige Vorwärtsbewegung des Parallelogrammes in Richtung auf die Schnittkante teilweise ausgeglichen, so daß sich je nach Neigung der Führungsfläche 14 ein geringer Rücksprung ergibt.

In alternativer Ausführung kann das als drehbewegliche Rolle ausgebildete Führungselement 12 auch beidseitig zwischen zwei parallelen Führungsflächen 14, 14' innerhalb einer Ausnehmung eines feststehenden Führungsbügels 17 geführt sein. In diesem Fall liegt das Führungselement 12 mit nur geringem Spiel beidseitig an den Führungsflächen 14, 14' an, so daß keine Feder zum Andruck erforderlich ist. Der Führungsbügel 17 ist in seiner Neigung verstellbar ausgebildet, so daß sich damit die Größe des Vor- bzw. Rücksprunges auf ein gewünschtes Maß einstellen läßt.

Bei der Ausführung gemäß Figur 3 ist an beiden Längsarmen 1, 2 je ein Führungselement 12 mit einem Führungsbügel 17 gemäß Figur 2 vorgesehen. Die Längsarme 1, 2 sind zwischen ihren Führungsbügeln 17 und den Drehlagern 4, 5 mittels einer Bohrung, in der eine Schubstange gleitet, teleskopartig verlängerbar. Ein bei den Ausführungen gemäß Figur 1 bzw. 2 vorgesehener Lagerbock ist somit nicht erforderlich. Allerdings muß bei einer Neigungsverstellung des Führungsbügels 17 dafür Sorge getragen werden, daß beide Führungsbügel stets die gleiche Neigung haben.

**Ansprüche**

1. Säge, insbesondere Stichsäge oder Dekupiersäge, mit einem Sägeblatt, das von einem Motor über ein Parallelogrammgestänge angetrieben ist, wobei das Sägeblatt an einem die beiden Längsarme des Parallelogrammgestänges verbindenden Verbindungsschenkel befestigt ist, dadurch gekennzeichnet, daß die beiden Längsarme (1, 2) in ihrer Längsrichtung verschieblich angeordnet sind, daß mindestens einer der beiden Längsarme (1, 2) ein Führungselement (12) aufweist, das an einer winklig zum Verbindungsschenkel (6) geneigten, feststehenden Führungsfläche (14) zwangsgeführt ist.

2. Säge nach Anspruch 1, dadurch gekennzeichnet, daß die beiden Längsarme (1, 2) an einem längsverschieblichen Lagerbock (3) drehbeweglich gelagert sind, und daß der Lagerbock (3) zum Andruck des Führungselementes (12) an die Führungsfläche (14) durch eine Feder (15) beaufschlagt ist.

3. Säge nach Anspruch 1 oder 2, dadurch gekennzeichnet, daß das Führungselement (12) innerhalb einer Ausnehmung eines feststehenden Führungsbügels (17) zwischen zwei parallelen Führungsflächen (14, 14') beidseitig geführt ist.

4. Säge nach einem der Ansprüche 1 bis 3, dadurch gekennzeichnet, daß die Neigung der Führungsfläche/-flächen (14) in bezug auf den Verbindungsschenkel (6) verstellbar ist.

5. Säge nach Anspruch 3 oder 4, dadurch gekennzeichnet, daß die beiden Längsarme (1, 2) jeweils an einem feststehenden Drehlager (4, 5) gelagert sind und zwischen den Führungselementen (12) und den Drehlagern (4, 5) teleskopartig verlängerbar sind, wobei die Führungselemente (12) zwischen je zwei parallelen Führungsflächen (14, 14') beidseitig geführt sind.

6. Säge nach einem der vorhergehenden Ansprüche, dadurch gekennzeichnet, daß die Säge als tragbares, handgeführtes Gerät ausgebildet ist.

7. Säge nach einem der vorhergehenden Ansprüche, dadurch gekennzeichnet, daß das Sägeblatt beidseitig eingespannt ist.

8. Säge nach einem der vorhergehenden Ansprüche, dadurch gekennzeichnet, daß der durch die Wegdifferenz des Sägeblattes in bezug auf die Schnittkante zwischen den beiden Endstellungen des Verbindungsschenkels gegebene Rücksprung zwischen 0.5 und 2 mm liegt.

9. Säge nach einem der vorhergehenden Ansprüche, dadurch gekennzeichnet, daß das Führungselement (12) kreisförmig, vorzugsweise als drehbewegliche Rolle, ausgebildet ist.

Fig.1

Fig.2

Fig.3

| Europäisches Patentamt | **EUROPÄISCHER RECHERCHENBERICHT** | Nummer der Anmeldung |

**EINSCHLÄGIGE DOKUMENTE**   EP 90113398.3

| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
|---|---|---|---|
| X | <u>DE - C - 815 839</u><br>(GEBRÜDER BOEHRINGER)<br>* Gesamt *<br>-- | 1 | B 23 D 49/16 |
| D,X | <u>DE - A1 - 3 722 542</u><br>(REINHARD FREUD)<br>* Gesamt *<br>-- | 1 | |
| D,A | <u>DE - C2 - 2 334 911</u><br>(ABEL)<br>* Gesamt *<br>---- | 1 | |
| | | | RECHERCHIERTE SACHGEBIETE (Int Cl⁵)<br><br>B 23 D 49/00<br>B 27 B  3/00 |

Der vorliegende Recherchenbericht wurde für alle Patentansprüche erstellt.

| Recherchenort | Abschlußdatum der Recherche | Prüfer |
|---|---|---|
| WIEN | 03-10-1990 | KRUMPSCHMID |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, überein- stimmendes Dokument

EPA Form 1503 03 82